# EUROPEAN PATENT APPLICATION

(11) **EP 3 401 851 A1**
(43) Date of publication of application: **14.11.2018**
(21) Application number: 16883710.2
(22) Date of filing: 25.11.2016
(51) Int. Cl.: G06Q 10/02, G06F 17/30, G06Q 10/10

(54) **RESERVATION PROCESSING DEVICE, USER TERMINAL, AND RESERVATION PROCESSING METHOD**

(30) Priority: 07.01.2016 JP 2016001937
(71) Applicant: Recruit Co., Ltd., Chuo-ku Tokyo 1040061 (JP)
(72) Inventor: YUMIBA, Hirotsugu, Tokyo 100-6640 (JP)
(74) Representative: EIP
(86) International application number: PCT/JP2016/085060
(87) International publication number: WO 2017/119210

(57) **Abstract**

An event capable of being reserved is provided to a vacant time in a schedule. A reservation applicant terminal 4 specifies a vacant time in a schedule based on schedule information regarding the schedule of a reservation applicant and transmits the specified vacant time to a reservation processing server 2. The reservation processing server 2 receives the vacant time in the schedule of the reservation applicant and specifies one or more events capable of being reserved in the vacant time from events in reservable event information regarding events which are provided by providers and are targets of reservations, by using the received vacant time. The reservation processing server provides information regarding the specified events to the reservation applicant terminal 4 as a transmission source of the vacant time used for specifying the events.

## Description

### Cross-Reference to Related Applications

This application is based on Japanese Patent Application No. 2016-001937 filed on January 7, 2016, the contents of which are incorporated herein by reference.

### Technical Field

The present invention relates to a reservation processing device, a user terminal, and a reservation processing method.

### Background Art

Patent Document 1 discloses a reservation system for reserving an instruction time at a driving school. In the section of "Background Art" in Patent Document 1, it is disclosed that, when instructors are assigned to the schedule table, the instructors are assigned in consideration of individual schedules of the instructors. As described above, when making the schedule, generally, the schedule is adjusted not to overlap another schedule. Therefore, for example, when a student who is to receive an instruction reserves an instruction time, it is assumed that the student checks his/her schedule and makes a reservation to a vacant time when his/her schedule is not filled.

### Citation List

### Patent Document

Patent Document 1: Japanese Patent Application Laid-Open No. 2002-56106

### Summary

For a user who makes a reservation, it is convenient if there is a mechanism of providing an event at a vacant time in user's schedule in addition that the user makes a reservation to the vacant time while checking the schedule as described in the related art. The present invention has been made to solve the above-described problem, and one object thereof is to provide a reservation processing device, a user terminal, and a reservation processing method in which an event capable of being reserved is capable of being provided to a vacant time in a schedule.

According to an aspect of the present invention, a reservation processing device includes means for storing reservable event information regarding an event which is provided by a provider and is a target of a reservation, means for acquiring a vacant time in a schedule of a user, means for specifying one or more events capable of being reserved in the vacant time from events in the stored reservable event information, by using the acquired vacant time, and means for providing information regarding the specified event to a user terminal as an acquisition source of the vacant time used for specifying the event.

The reservable event information may include a place and a time in which the event is provided. In a case where a plurality of events capable of being reserved in one vacant time exists, the means for specifying the event may arrange the plurality of events in time series based on the time in which the event is provided, and further specify a plurality of events capable of being reserved together from the plurality of events, based on the time and the place in which the event is provided, a travel time required to move between places in which the events are provided, and the vacant time.

The reservation processing device may further include means for accumulating preference information regarding preference of the user and/or a behavior pattern regarding a habitual behavior of the user. The means for specifying the event may perform specifying by further using the preference information and/or the behavior pattern when specifying the one or more events capable of being reserved in the vacant time.

The reservation processing device may further include means for accepting a reservation for the provided event.
The reservation processing device may further include means for analyzing the preference information and/or the behavior pattern based on the accepted reservation.

The reservation processing device may further include means for managing accepted reservations for specified events as one integrated reservation, in a case where the plurality of events is specified.

The reservation processing device may further include means for acquiring current position information of the user terminal. The means for specifying the event may perform specifying by further using the acquired current position information of the user terminal when specifying the one or more events capable of being reserved in the vacant time.

The means for providing the event may provide a plurality of events to be arranged in time series, in a case where the plurality of events is specified.

According to another aspect of the present invention, a user terminal includes means for managing schedule information regarding a schedule of a user, means for specifying a vacant time in the schedule based on the managed schedule information, means for transmitting the specified vacant time to a predetermined server apparatus, means for receiving provision of information regarding one or more events which are provided by providers and are capable of being reserved in the vacant time, and means for making reservations for the events included in the provided information.

According to still another aspect of the present invention, a reservation processing method is a method of processing a reservation between a user terminal and a server apparatus. The reservation processing method includes a step of specifying a vacant time in a schedule based on schedule information regarding the schedule of a user, a step of transmitting the specified vacant time to the server apparatus, by the user terminal, a step of receiving the vacant time in the schedule of the user, a step of specifying one or more events capable of being reserved in the vacant time from events in reservable event information regarding events which are provided by providers and are targets of reservations, by using the received vacant time, and a step of providing information regarding the specified events to the user terminal as a transmission source of the vacant time used for specifying the events, by the server apparatus.

### Advantageous Effects of Invention

According to the present disclosure, it is possible to provide an event capable of being reserved to a vacant time in a schedule.

### Brief Description of Drawings

Fig. 1 is a diagram illustrating a configuration of a reservation processing system including a reservation processing server and a reservation applicant terminal according to an embodiment.
Fig. 2 is a diagram illustrating a configuration of the reservation processing server illustrated in Fig. 1.
Fig. 3 is a diagram illustrating a configuration of the reservation applicant terminal illustrated in Fig. 1.
Fig. 4 is a sequence chart illustrating procedures when an event capable of being reserved in a vacant time in a schedule is provided to the reservation applicant terminal.

### Description of Embodiments

Hereinafter, an embodiment of the present invention will be described in detail with reference to the drawings. The same components are denoted by the same reference signs and descriptions thereof will not be repeated.

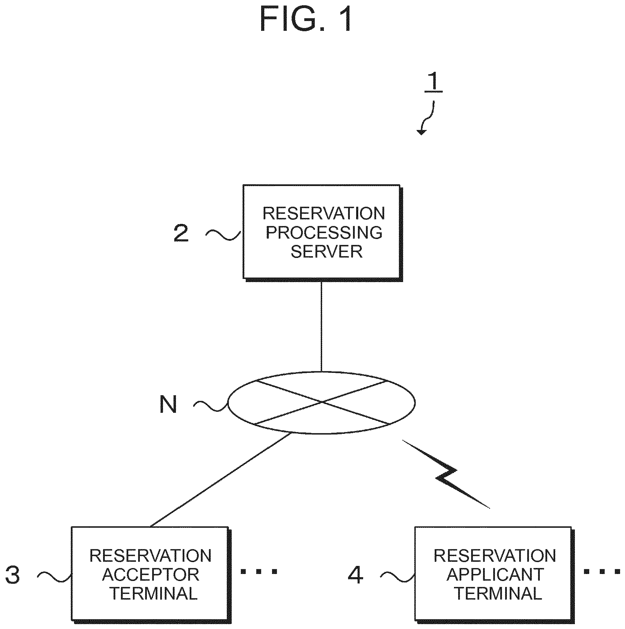

Fig. 1 is a schematic diagram illustrating a configuration of a reservation processing system including a reservation processing server (reservation processing device and server apparatus) and a reservation applicant terminal (user terminal) according to an embodiment of the present invention. As illustrated in Fig. 1, a reservation processing system 1 in the embodiment includes a reservation processing server 2, one or more reservation acceptor terminals 3, and one or more reservation applicant terminals 4. Each of the reservation acceptor terminals 3 and the reservation applicant terminals 4 is configured to be capable of communicating with the reservation processing server 2 through a network N.

The reservation acceptor terminal 3 is a terminal device used by a provider who provides a service, as a reservation acceptor who accepts a reservation for an event which will be described later. Regarding the provider which may act as the reservation acceptor, providers of all industry types or all business types are set as a target.

The reservation applicant terminal 4 is a terminal device used by a user who receives the provided service, as a reservation applicant who makes a reservation for an event.

As the event, anything which is capable of serving as a target of a reservation may be provided. As an example, an event is capable of being specified by reservable event information which is generated by the reservation acceptor setting a reservation frame. Details of the reservable event information will be described later. A method of setting the reservation frame may be determined in accordance with the reservation acceptance type, for example. As an example of the reservation acceptance type, a preset type and a free acceptance type which will be described later may be employed. As the reservation acceptance type, other types may be provided, and any type may be employed.

The preset type means a type in which a reservation from a reservation applicant is accepted by using a reservation frame which has been set in advance by a reservation acceptor. The free acceptance type means a type in which a reservation from a reservation applicant is accepted by causing the reservation applicant to set a desired reservation frame within a service provision time set by a reservation acceptor.

Before the reservation frame is set, a reservation acceptor registers items as follows, for example: a menu item for specifying the contents of a service provided by the reservation acceptor; a resource item as a resource (for example, person, equipment, furniture, and the like) when a service is provided; an item of a resource group to which the resource is capable of belonging; a reservation capacity number item; a reservation acceptable date item; and a charge item.

In the preset type, for example, the reservation frame is set in a manner that the reservation acceptor sets a menu item and a time zone in which a service corresponding to the menu item is provided.

In the free acceptance type, for example, the reservation frame is set in a manner that the reservation acceptor sets a service provision time and the reservation applicant designates a desired time zone in the service provision time.

In the embodiment, descriptions will be made on the assumption that a personal computer (PC) is set to be the reservation acceptor terminal 3, and a smart phone is set to be the reservation applicant terminal 4. However, the invention is not limited thereto. As the reservation acceptor terminal 3 and the reservation applicant terminal 4, for example, a PC, a notebook PC, a tablet terminal, a smartphone, a portable phone, a portable information terminal (PDA), and other terminal devices may be appropriately used. Examples of the other terminal devices include a device with a display screen, such as a navigation device, a television device, and a wearable device and a device that processes information by using a sound input/output function.

For example, the reservation processing server 2 is configured by a computer having relatively high operation processing ability. The reservation processing server 2 realizes a server function by a predetermined server program operating in the computer. Here, the number of computers constituting the reservation processing server 2 is not necessarily one. The reservation processing server 2 may be configured by a plurality of computers distributed over the network N.

The network N includes a communication network which enables information to be transmitted and received between the reservation processing server 2, the reservation acceptor terminal 3, and the reservation applicant terminal 4. As the network N, for example, any of the Internet, a LAN, a private line, a telephone line, a corporate network, a mobile communication network, Bluetooth (registered trademark), WiFi (Wireless Fidelity), other communication lines, combinations thereof and the like may be used. The network N may be wired or wireless.

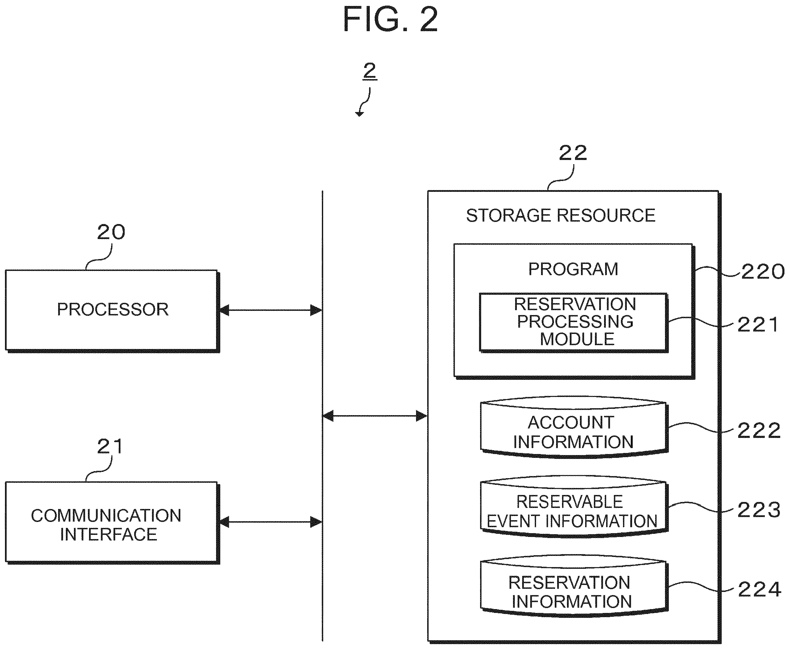

As illustrated in Fig. 2, the reservation processing server 2 includes a processor 20, a communication interface 21, and a storage resource 22, for example.

The processor 20 is configured by an arithmetic logic unit that processes an arithmetic operation, a logical operation, a bit operation, and the like, and various registers. The processor 20 realizes various functions which will be described later, by executing a computer program 220 stored in the storage resource 22. The various registers include, for example, a program counter, a data register, a command register, a general-purpose register, and the like.

The communication interface 21 is a hardware module which is connected to the network N and is used for communicating with other terminals on the network N. The communication interface 21 is, for example, a modulator-demodulator such as an ISDN modem, an ADSL modem, a cable modem, an optical modem, and a soft modem.

The storage resource 22 is, for example, a logical device provided by a storage area of a physical device. The physical device is, for example, a computer-readable recording medium such as a disk drive or a semiconductor memory. The storage resource 22 may be constructed by mapping a plurality of physical devices on one logical device or may be constructed by mapping one physical device on a plurality of logical devices. The computer program 220 is stored in the storage resource 22.

The computer program 220 is a program for performing predetermined processing. The computer program includes a plurality of software modules which is appropriately called and executed during an operation of the main program of the reservation processing server 2. The software module is a subprogram modularized for performing specific processing. For example, the software module is created by using a procedure, a subroutine, a method, a function, a data structure, and the like.

For example, the computer program 220 includes a reservation processing module 221. A function realized by executing the reservation processing module 221 will be described later.

An operating system program, a driver program, various types of data, and the like used in processing of the reservation processing server 2 are stored in the storage resource 22 in addition to the computer program 220. Examples of the driver program include a communication interface driver program for controlling the communication interface 21, for example.

As the various types of data, for example, the following is provided:
account information 222 regarding an account of a reservation acceptor, which is registered by the reservation acceptor and an account of a reservation applicant, which is registered by the reservation applicant;
reservable event information 223 regarding an event as a target of a reservation registered by the reservation acceptor; and reservation information 224 regarding reservation details registered by the reservation applicant.

The account information 222 includes account information of the reservation acceptor and account information of the reservation applicant. The account information of the reservation acceptor includes, for example, a user ID item, a password item, a mail address item, a name item, an industry type and business type item, and the like, as data items. The user ID item stores identification information for specifying a reservation acceptor as a provider. The industry type and business type item stores information of specifying an industry type or business type of the reservation acceptor.

The account information of the reservation applicant includes, for example, a user ID item, a password item, a mail address item, a name item, an address item, a contact point item, and the like, as data items. The user ID item stores identification information for specifying a reservation applicant as a user.

The reservable event information 223 includes, for example, a user ID item, an event ID item, a category item, a provision place item, a provision time item, a charge item, a person-in-charge item, a supplementary explanation item, and the like, as data items. The user ID item is similar to the user ID item of the account information of the reservation acceptor. The account information of the reservation acceptor is capable of being associated with the reservable event information 223 by the user ID item.

The event ID item stores event identification information for specifying an event, such as an event number or an event name, for example. The category item stores information for specifying the category of the event. The category of the event is capable of being provided, for example, for each industry type or each business type, or for each type of a provision target. Specifically, a food and beverage establishment, a hospital, a school, a fitness center, a beauty salon, types of food (for example, tempura-soba or zaru-soba to be served at a soba restaurant) served at a food and beverage establishment, and the like correspond to the category of the event. A plurality of classes may be randomly provided in each category. For example, in a case where the category is a food and beverage establishment, restaurants, cafes, pubs, and the like may be provided as lower classes of the food and beverage establishment. A Japanese style, a Chinese style, a Western style, and the like may be provided as lower classes of the restaurants. Further, sushi restaurants, soba restaurants, tempura restaurants, and the like may be provided as lower classes of the Japanese style.

The provision place item stores information for specifying a provision place of the event. The provision time item stores provision time of an event (for example, provision start time point and provision end time point). The charge item stores the charge for the event. The person-in-charge item stores information for specifying a person in charge on a provider side who provides the event. The supplementary explanation item stores memo-like information regarding an event, for example, such as details of the event and information regarding the preference of a reservation applicant as a target.

The reservation information 224 includes, for example, a reservation ID item, an event ID item, a reservation detail item, a user ID item of a reservation applicant, a memo item, and the like, as data items. The reservation ID item stores identification information for specifying a reservation made by the reservation applicant. The event ID item is an item similar to the event ID item of the above reservable event information 223. The reservable event information 223 and the reservation information 224 are capable of being associated with each other by the event ID item.

The reservation detail item stores information regarding the reservation details, for example, such as the number of reserved persons, a reserved course, and a reserved time. The user ID item of a reservation applicant is similar to the user ID item of the account information of the above reservation applicant. The account information of the reservation applicant is capable of being associated with the reservation information 224 by the user ID item. The memo item stores an evaluation of the reservation applicant for a reservation or memo-like information regarding the reservation, for example, such as a word of mouth.

A structure of a database including the account information 222, the reservable event information 223, and the reservation information 224 which have been described above, and a combination of the data items included in the above kinds of information are just examples. The structure of the database or the combination of the data items are capable of being appropriately changed in accordance with an operating system.

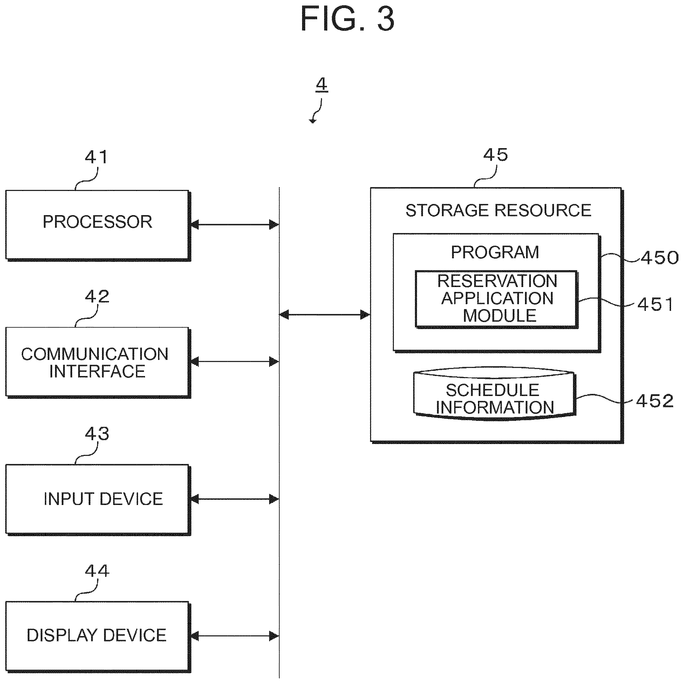

As illustrated in Fig. 3, for example, the reservation applicant terminal 4 includes a processor 41, a communication interface 42, an input device 43, a display device 44, and storage resource 45.

The processor 41 is configured by an arithmetic logic unit and various registers (program counter, data register, command register, general-purpose register, and the like). For example, the processor 41 interprets and executes a computer program 450 stored in the storage resource 45 so as to transmit a request to the reservation processing server 2 in accordance with information input from the input device 43 and to receive a response from the reservation processing server 2.

For example, the communication interface 42 provides a connection interface with the reservation processing server 2 and is configured by a wireless communication interface or a wired communication interface. The input device 43 provides an interface for receiving an input from the reservation applicant. As the input device, a touch panel, a keyboard, a mouse, and the like may be exemplified. The display device 44 provides an image display interface such as a reservation acceptance screen for the reservation applicant. As the display device, an organic EL display, a liquid crystal display, and the like may be exemplified.

The storage resource 45 is, for example, a logical device provided by a storage area of a physical device. The physical device is, for example, a computer-readable recording medium such as a disk drive or a semiconductor memory. The computer program 450 is stored in the storage resource 45.

The computer program 450 is a program for performing predetermined processing. The computer program includes a plurality of software modules which is appropriately called and executed during an operation of the main program of the reservation applicant terminal 4. The software module is a subprogram modularized for performing specific processing. For example, the software module is created by using a procedure, a subroutine, a method, a function, a data structure, and the like.

An operating system program, a driver program, various types of data, and the like used in processing of the reservation applicant terminal 4 are stored in the storage resource 45 in addition to the computer program 450. Examples of the driver program include an input device driver program for controlling the input device 43 and an output device driver program for controlling the display device 44.

Examples of the various types of data include schedule information 452 regarding a schedule of the user. The schedule information 452 includes, for example, a schedule date item, a schedule place item, a schedule detail item, and the like, as data items.

An application for making a reservation (referred to as "a reservation application" below) is installed on the reservation applicant terminal 4, and a reservation application module 451 is stored in the storage resource 45. A function realized by executing the reservation application module 451 will be described below.

The reservation application module 451 receives an account registration of a reservation applicant. When the reservation applicant starts using the reservation application, the reservation applicant operates the reservation applicant terminal 4 to input information regarding the account of the reservation applicant. The input information is transmitted to the reservation processing server 2 and is managed as the account information 222 of the reservation applicant.

The reservation application module 451 specifies a vacant time in a schedule based on the schedule information 452 and transmits one or more specified vacant times to the reservation processing server 2.

Specifically, for example, in a case where a period during an interval between two schedule dates and times before and after is longer than a lower limit time allowed to be considered as the vacant time, the reservation application module 451 specifies this period as the vacant time. The lower limit time may be randomly set.

A range (period) of the schedule date and time for searching the vacant time may be narrowed, for example, by the reservation applicant randomly setting a search start date and time and a search end date and time. The above range may be narrowed by being selected from a plurality of predetermined patterns by the reservation applicant.

A timing at which the vacant time is specified and transmitted may be, for example, regular. The timing may be each time the schedule is updated in the reservation applicant terminal 4. The timing may be an any timing which has been set by the reservation applicant or a timing at which the reservation applicant inputs an instruction to start processing. In a case where a message for requiring transmission of the vacant time to the reservation applicant terminal 4 (also referred to as "a transmission request message" below) is received from the reservation processing server 2, the reservation application module may specify and transmit the vacant time.

The reservation application module 451 receives information regarding one or more events capable of being reserved in each vacant time transmitted to the reservation processing server 2, as reservation recommendation information. That is, the reservation application module 451 receives provision of the reservation recommendation information from the reservation processing server 2.

The reservation application module 451 causes the reservation applicant terminal 4 to display an event included in the reservation recommendation information. Any method of displaying may be set. For example, a pop-up screen for displaying an event included in the reservation recommendation information may be displayed in a display of the reservation applicant terminal 4. An e-mail of describing the event included in the reservation recommendation information may be transmitted to and displayed on the reservation applicant terminal 4. The event included in the reservation recommendation information may be displayed by being posted on My Page or the like of the reservation applicant.

The reservation application module 451 performs reservation application processing for the event included in the reservation recommendation information, in accordance with an instruction by the operation of the reservation applicant. For example, the reservation application processing is performed by procedures as follows.

Firstly, the reservation applicant selects an event as a reservation target. The reservation application module 451 displays the reservation acceptance screen for accepting a reservation for the selected event. The reservation applicant inputs or selects information required for the reservation to or on the reservation acceptance screen, and then inputs a reservation confirmation instruction. The reservation application module 451 transmits the input or selected information to the reservation processing server 2 and confirms the reservation application processing.

Next, a function realized by executing the reservation processing module 221 of the reservation processing server 2 illustrated in Fig. 2 will be described.

The reservation processing module 221 receives an account registration of a reservation acceptor as a provider. When the reservation acceptor starts using the reservation processing system 1, the reservation acceptor operates the reservation acceptor terminal 3 to access a predetermined Web page of the reservation processing server 2, and registers account information 222 of the reservation acceptor.

The reservation processing module 221 causes the reservation acceptor who has performed the account registration to register reservable event information 223 regarding an event as a target of a reservation.

The reservation processing module 221 receives the vacant time in the schedule of the reservation applicant, which is transmitted from the reservation applicant terminal 4. The vacant time in the schedule, which is transmitted from the reservation applicant terminal 4 is not limited to be voluntarily transmitted by the reservation applicant terminal 4. The vacant time in the schedule may be transmitted from the reservation applicant terminal 4 in response to a transmission request message transmitted by the reservation processing server 2.

The reservation processing module 221 specifies one or more events capable of being reserved in the vacant time from events in the reservable event information 223 by using the vacant time in the schedule, which has been received from the reservation applicant terminal 4. For example, the event may be specified by comparing the received vacant time to the provision time item of the reservable event information 223.

Specifically, in addition to a case where the entirety of the provision time of an event is provided within the target vacant time, in a case where a portion of the provision time of the event overlaps a portion of the vacant time, the reservation processing module 221 specifies the event as the event capable of being reserved in the vacant time.

Here, when specifying the event, the reservation processing module may add preference information regarding the preference of the reservation applicant and/or a behavior pattern regarding a habitual behavior of the reservation applicant (also referred to as "preference information/behavior pattern" below) to a specifying condition.

For example, the preference information/behavior pattern may be obtained by accumulating an operation history, an access history, a traveling history, and the like of the reservation applicant terminal 4 and analyzing the accumulated pieces of information. The preference information/behavior pattern may be obtained by analyzing the reservation information 224 corresponding to a reservation which the reservation applicant has previously made. The preference information/behavior pattern may be obtained by performing the questionnaire regarding the preference or the behavior for the reservation applicant and analyzing the questionnaire information as the response of the questionnaire.

In a case of specifying the event by using the preference information/behavior pattern, for example, the reservation processing module compares the preference information/behavior pattern to each of pieces of information stored in the category item, the provision place item, the provision time item, the charge item, and the supplementary explanation item of the reservable event information 223 and the memo item and the like of the reservation information 224. Then, the reservation processing module specifies the event based on reservable event information 223 corresponding to the information having the same contents.

The reservation processing module can provide an event suitable for individual personality or activity of the reservation applicant by adding the preference information or the behavior pattern to the condition of when the reservation processing module specifies the event.

The current position of the reservation applicant terminal 4 may be added to the specifying condition of when the reservation processing module specifies the event. When adding the current position to the specifying condition, the reservation processing module may add a situation in which the vacant time in the schedule is included within a period from the current time point to a time point after a predetermined time elapses, as an additional condition. Thus, the reservation processing module can specify and present an event capable of being provided in a range in which the reservation applicant is capable of coming to the event by a time point at which the event starts, based on the whereabouts of the reservation applicant at the current time point. Regarding the above predetermined time, a specific time may be uniformly set for all events, or any time may be set in accordance with the contents and the like of an event to be provided. For example, a period of several hours to several days may be set in a case where the event is the meal, and a period of 1 to 3 months may be set in a case where the event is a travel, as the predetermined time.

For example, position information of the reservation applicant terminal 4 may be used as the current position of the reservation applicant terminal 4. For example, the position information of the reservation applicant terminal 4 may be acquired by using the global positioning system (GPS).

In a case where a plurality of events capable of being reserved in the vacant time exists, the reservation processing module 221 may specify events capable of being reserved together, from the plurality of events. The events capable of being reserved together are capable of being specified in a manner as follows, for example.

Firstly, the reservation processing module 221 arranges the plurality of events specified as the events capable of being reserved in the vacant time, in time series. The reservation processing module may use the provision time of the reservable event information 223 in order to arrange the events in time series.

Then, the reservation processing module specifies a plurality of events capable of being reserved together, based on the provision time and the provision place of the reservable event information 223, a travel time required to move between provision places, and the received vacant time.

That is, in a case where a plurality of events capable of being reserved in one vacant time exists, the reservation processing module 221 arranges the plurality of events in time series based on the time in which the event is provided, and specifies a plurality of events capable of being reserved together from the plurality of events, based on the time and the place in which the event is provided, the travel time required to move between places in which the events are provided, and the vacant time.

When the travel time is calculated, the travel time may be calculated on the premise that moving means (for example, train, bus, car, or walking) which causes the travel time to be the shortest is used, or the travel time may be calculated on the premise that moving means selected by the reservation applicant is used.

In a case where the current position of the reservation applicant terminal 4 is specified, the reservation processing module may specify events capable of being reserved together, by further using the current position. Thus, it is possible to specify events more suitable for the behavior of the reservation applicant.

The reservation processing module 221 provides the specified event to the reservation applicant terminal 4. The reservation applicant terminal 4 as a provision destination is a reservation applicant terminal 4 that has transmitted the vacant time in the schedule used for specifying the provided event.

In a case where a plurality of events which has been specified exists, the reservation processing module 221 provides the plurality of events to the reservation applicant terminal 4, so as to be arranged in time series.

The reservation processing module 221 accepts reservations for the events provided to the reservation applicant terminal 4, from the reservation applicant terminal 4. The reservation processing module 221 manages the reservations for the events, which have been accepted from the reservation applicant terminal 4.

In a case where a plurality of events is received from the reservation applicant terminal 4, the reservation processing module 221 manages reservations for the plurality of events which have been received, as one integrated reservation. For example, the reservations may be managed in a manner as follows.

The reservation processing module 221 assigns a common reservation ID to pieces of information regarding the reservations for the plurality of events and integrates the pieces of information. The reservation processing module stores an information group obtained by the integration, as one piece of the reservation information 224, in the storage resource 22 of the reservation processing server 2. At this time, individual reservation IDs which respectively correspond to the events may be further assigned in addition to the common reservation ID.

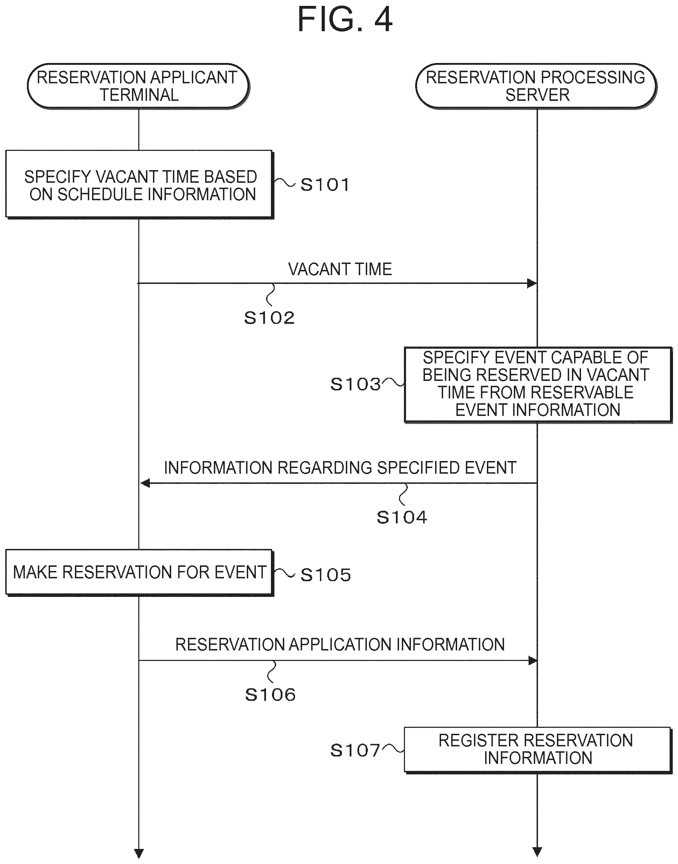

Procedures when an event capable of being reserved in a vacant time in a schedule of the reservation applicant are provided to the reservation applicant terminal 4 will be described with reference to Fig. 4.

Firstly, the reservation application module 451 of the reservation applicant terminal 4 specifies a vacant time in a schedule based on the schedule information 452 (Step S101) and transmits one or more specified vacant times to the reservation processing server 2 (Step S102).

The reservation processing module 221 of the reservation processing server 2 specifies an event capable of being reserved in the vacant time from events in the reservable event information 223, based on the vacant time received from the reservation applicant terminal 4 (Step S103).

The reservation processing module 221 transmits information regarding the event specified in Step S103, to the reservation applicant terminal 4 (Step S104).

The reservation application module 451 of the reservation applicant terminal 4 makes a reservation for the event in accordance with an instruction by the operation of the reservation applicant (Step S105) and transmits the input reservation application information to the reservation processing server 2 (Step S106).

The reservation processing module 221 of the reservation processing server 2 generates reservation information based on the reservation application information received from the reservation applicant terminal 4, and registers the generated reservation information in the storage resource 22 (Step S107).

As described above, according to the reservation processing system 1 in the embodiment, the reservation applicant terminal 4 is capable of specifying a vacant time in a schedule based on the schedule information 452 of a reservation applicant and transmitting the specified vacant time to a reservation processing server 2. The reservation processing server 2 is capable of receiving the vacant time in the schedule of the reservation applicant and specifying one or more events capable of being reserved in the vacant time from events in the reservable event information 223, by using the received vacant time. The reservation processing server is capable of providing information regarding the specified event to the reservation applicant terminal 4 as a transmission source of the vacant time.

Accordingly, according to the reservation processing system 1 in the embodiment, it is possible to provide one or more events capable of being reserved to the vacant time of a schedule of a reservation applicant. Therefore, it is possible to intensively process reservations for a plurality of events.

The reservation processing server 2 in the embodiment is capable of providing the reservation recommendation information by collecting the vacant time in the schedule from the schedule information 452 managed by the reservation applicant terminal 4. Thus, it is possible to provide an event capable of being reserved without collecting individual information capable of specifying a specific person from the reservation applicant terminal 4. That is, it is possible to provide information effective for the reservation applicant while considering the protection of the individual information.

Further, according to the reservation processing system 1 in the embodiment, it is possible to accept a reservation for an event provided to the reservation applicant terminal 4 and to manage the accepted reservation for the event with high efficiency.

### [Modification Example]

The present invention is not limited to the above-described embodiment and may be implemented in other various forms in a range without departing from the gist of the present invention. Therefore, the embodiment is just an example in all aspects and is not interpreted restrictively. For example, the order of the above-described processes (steps) may be randomly changed in a range in which inconsistencies do not occur in the process details, and the processes (steps) may be performed in parallel.

The above-described embodiment is described on the assumption that the reservable event information 223 includes pieces of reservable event information corresponding to a plurality of providers of different industry types or different business types. However, the present invention is not limited thereto and may also be applied to a case of storing only reservable event information of a specific provider.

In the above-described embodiment, the reservation acceptor terminal 3 accesses a Web page of the reservation processing server 2 and performs processing. However, it is not necessary that the terminal accesses the Web pages and performs the processing. For example, the reservation acceptor terminal 3 may install a reservation processing application, and thus realize the various functions in the above-described reservation processing system. In this case, the reservation acceptor terminal 3 may acquire the latest reservable event information, reservation information or the like from the reservation processing server 2, perform reservation processing and the like by using the acquired latest information, and transmit data processed in the reservation acceptor terminal 3, to the reservation processing server 2.

In the above-described embodiment, in a case where a reservation for an event received from the reservation applicant terminal 4 is established, the reservation processing module 221 of the reservation processing server 2 may transmit reservation establishment information regarding the established reservation, to the reservation applicant terminal 4. In this case, for example, when receiving the reservation establishment information from the reservation processing server 2, the reservation applicant terminal 4 may update the schedule information of the reservation applicant terminal 4 by using the received reservation establishment information. The reservation applicant receiving a notification indicating that the reservation establishment information has been received may operate the reservation applicant terminal 4 to update the schedule information of the reservation applicant terminal 4. The reservation establishment information includes, for example, a reservation date and time, a reserved place, the number of persons for the reservation, a reserved course, and a reservation fee.

The program in the embodiment may be installed or loaded on a computer by being downloaded through various recording media (computer-readable recording media) such as an optical disk (for example, a CD-ROM), a magnetic disk, and a semiconductor memory or via a communication network or the like.

### Industrial Applicability

The reservation processing device, the user terminal, and the reservation processing method according to the present invention are appropriate for providing an event capable of being reserved to a vacant time in a schedule.

### Reference Signs List

1...reservation processing system, 2...reservation processing server (reservation processing device, server apparatus), 3...reservation acceptor terminal, 4...reservation applicant terminal (user terminal), 20...processor, 21 ...communication interface, 22...storage resource, 41 ...processor, 42...communication interface, 43...input device, 44...display device, 45...storage resource, 220...computer program, 221...reservation processing module, 222...account information, 223...reservable event information, 224...reservation information, 450...computer program, 451...reservation application module, 452...schedule information, N...network

## Claims

1. A reservation processing device comprising:
means for storing reservable event information regarding an event which is provided by a provider and is a target of a reservation;
means for acquiring a vacant time in a schedule of a user;
means for specifying one or more events capable of being reserved in the vacant time from events in the stored reservable event information, by using the acquired vacant time; and
means for providing information regarding the specified event to a user terminal as an acquisition source of the vacant time used for specifying the event.

2. The reservation processing device according to claim 1,
wherein the reservable event information includes a place and a time in which the event is provided, and
in a case where a plurality of events capable of being reserved in one vacant time exists, the means for specifying the event arranges the plurality of events in time series based on the time in which the event is provided, and specifies a plurality of events capable of being reserved together from the plurality of events, based on the time and the place in which the event is provided, a travel time required to move between places in which the events are provided, and the vacant time.

3. The reservation processing device according to claim 1 or 2, further comprising:
means for accumulating preference information regarding preference of the user and/or a behavior pattern regarding a habitual behavior of the user,
wherein the means for specifying the event performs specifying by further using the preference information and/or the behavior pattern when specifying the one or more events capable of being reserved in the vacant time.

4. The reservation processing device according to any one of claims 1 to 3, further comprising:
means for accepting a reservation for the provided event.

5. The reservation processing device according to claim 4, further comprising:
means for analyzing the preference information and/or the behavior pattern based on the accepted reservation.

6. The reservation processing device according to claim 4 or 5, further comprising:
means for managing accepted reservations for specified events as one integrated reservation, in a case where the plurality of events is specified.

7. The reservation processing device according to any one of claims 1 to 6, further comprising:
means for acquiring current position information of the user terminal,
wherein the means for specifying the event performs specifying by further using the acquired current position information of the user terminal when specifying the one or more events capable of being reserved in the vacant time.

8. The reservation processing device according to any one of claims 1 to 7,
wherein the means for providing the event provides a plurality of events to be arranged in time series, in a case where the plurality of events is specified.

9. A user terminal comprising:
means for managing schedule information regarding a schedule of a user;
means for specifying a vacant time in the schedule based on the managed schedule information;
means for transmitting the specified vacant time to a predetermined server apparatus;
means for receiving provision of information regarding one or more events which are provided by providers and are capable of being reserved in the vacant time; and
means for making reservations for the events included in the provided information.

10. A reservation processing method of processing a reservation between a user terminal and a server apparatus, the method comprising:
by the user terminal,
a step of specifying a vacant time in a schedule based on schedule information regarding the schedule of a user; and
a step of transmitting the specified vacant time to the server apparatus; and
by the server apparatus,
a step of receiving the vacant time in the schedule of the user;
a step of specifying one or more events capable of being reserved in the vacant time from events in reservable event information regarding events which are provided by providers and are targets of reservations, by using the received vacant time; and
a step of providing information regarding the specified events to the user terminal as a transmission source of the vacant time used for specifying the events.
